# EUROPEAN PATENT APPLICATION

(11) **EP 1 251 056 A1**
(43) Date of publication of application: **23.10.2002**
(21) Application number: 02252718.8
(22) Date of filing: 17.04.2002
(51) Int. Cl.: B62B 3/06

(54) **Load handling trolley**

(30) Priority: 20.04.2001 GB 0109702
(71) Applicant: Blackrock Engineering Limited, Great Budworth, Nr. Northwich, Cheshire CW9 6HF (GB)
(72) Inventor: Greenhalgh, Bernard, Lancashire BL4 7HX (GB)
(74) Representative: Cardwell, Stuart Martin

(57) **Abstract**

A load handling trolley of the type that normally runs in a channel led track, comprising an elongate load engager (12) that is raisable and lowerable relative to at least one bogie assembly (20) via ramp (40) and roller (34) means when the engager and the bogie assembly are caused to move longitudinally relative to each other. Positive retention means (50) between said engager and bogie assembly which comprises an anchor element (60) fixed to the load engager and at least one other inextendable relatively movable element (52, 54; 52') mounted for pivotal movement with respect to the anchor element. The relatively movable element has a slot to receive an axle or some other cross-connection of the roller means so as to move during relative movement of the engager and bogie assembly and wherein said relatively movable component has abutment means (64) that is cooperable with the load engager to limit articulation of said relatively movable component. In one embodiment the slot has two offset interconnected parts (72, 74).

## Description

The invention relates to load handling trolleys of the type that normally run in channel tracks and comprise elongate load engagers raisable and lowerable relative to bogies via ramp-and-roller means when the engager and the bogies are caused to move longitudinally relative to each other.

Successful and well-known examples of such trolley-in-track systems are available under the Registered Trade Mark JOLODA.

A strong reasonably flat floor into which the tracks are let, and reasonably rigid loads, such as containers or pallets, have led to remarkably low-profile trolleys in quite shallow track as only a small lift height has been adequate to give a free travel clearance for the load over the floor after insertion of and raising the trolley.

There is now a tendency, dictated by seeking minimum costs of floors, pallets and containers, for floors to be less reliably strong and flat and for loads to be less rigid, so that flexing or sagging can result in hitherto satisfactory lifting heights being insufficient always to avoid load-to-floor contact during movement of loads by the trolleys.

The success and reputation of JOLODA trolleys is based on sound and well-engineered design involving, inter alia, close interfitment of bogie side walls and depending walls of inverted channel section load engagers, virtually flush bottoms of such walls in the unraised state of the trolleys, and in one design positive retention means between those side and depending walls, but the limits set by rigid pin-and-ledge, groove or slot type positive retention means preclude achievement of desired amounts of increased lift.

Accordingly, our high lift trolley utilised positive retention means that is basically characterised by including a device having one component that is anchored and at least one other relative movable component connected thereto and coupled to a trolley part so to move during relative movement of the engager and bogie assembly.

It is evident that, for greater lift within the same basic trolley height, the ramp means must more nearly approach the available height of the space within inverted channel type load engagers encompassing the bogies, though we prefer that it should remain slightly less so that positive lateral location of sides of the bogies remain even approaching and at full lift height of the trolley, due to overlap by the depending sides of the load engager, which are preferably closely adjacent thereto throughout their length. Lift height will usually be greater on approach if, as is preferred, the ramps have locating depressions at full height.

More particularly we have utilised retention means in the form of spring links engaging and effectively in guiding/retaining engagement with rollers of the bogies, encompassing axles or rods thereof in a slot of the links otherwise anchored, clamped under wedges with which the rollers coact. The basic action of such an embodiment comprises a flexing of the spring restrainers for roller-axles as the bogies rollers mount ramps of the load engager.

It is accepted that our trolleys will inevitably be subjected to extremely rough treatment, even dropped, if not thrown, onto concrete floors, and we take pride in the fact that our trolleys can readily withstand such treatment without failure/breakage.

In that spirit, and for such treatment, we prefer to guard against the possibility that bogies can then be forced out of, "flirted" from, positions corresponding to design maxima, indeed extend beyond side walls of the load engager with deleterious effects if we rely entirely upon spring links however closely such are in guiding relation with roller axler/bogie cross-connections/bogie studs. Such guard has been afforded by inextensible limiting means for the springs links comprising a wire link extending from below the load engager ramps to the end of spring links, generally using U-shaped wire device with its bight captive under a said ramp.

The spring links are formed for engagement adjacent each side of bogie side walls by a unitary construction of spring steel, in sheet form with a first part to be clamped under ramp parts of the bogie and parts extending to each side of a such ramp part, those extending parts being returned on themselves at a suitable distance from the first part, and, further returned after a distance corresponding to maximum displacement of their engagers, e.g. roller axles, in climbing of ramp parts, then brought back to the first return bend to define a slot corresponding to the aforesaid maximum displacement, and yet further again returned through such first return bend and then, desirably, along the first mentioned extension.

However, an alternative to the aforesaid spring retention means and limiting means therefore is envisaged which will provide the desired positive retention and achieve the desired limit on movement, with a simpler and more economical construction which will give the same if not better reliability.

Accordingly, the present invention provides a load handling trolley of the type that normally runs in a channel led track comprising an elongate load engager raisable and lowerable relative to at least one bogie assembly via ramp-and-roller means when the engager and the bogie assembly are caused to move longitudinally relative to each other, and positive retention means between said engager and bogie assembly, said positive retention means comprising an anchor element fixed to the load engager and at least one other inextendable relatively movable element mounted for pivotal movement with respect to the anchor element and having a slot to receive an axle or some other cross-connection of the roller means so as to move during relative movement of the engager and bogie assembly, and wherein said relatively movable component has abutment means that is cooperable with the load engager to limit articulation of said relatively movable component.

More particularly, two relatively movable elements are provided, disposed to opposite sides of said roller means. The axle or cross-connection of the roller means is journalled in a trolley part. More particularly, it is journalled in opposite side frames of the bogie assembly. The relatively movable element comprises a link element made of steel. Conveniently it is made of mild steel.

In a preferred embodiment, the slot of the relatively movable element has two interconnected offset parts and hereinafter referred to as an elongate generated slot or an elongate kinked slot.

One specific preferred embodiment of the invention will now be described, by way of example, with reference to the accompanying drawings, in which:
Figure 1 is an inside fragmental side view of a trolley in its lowered or unraised state;
Figure 2 is a corresponding bottom plan view;
Figure 3 shows the trolley of Figure 1 raised;
Figure 4 is an exploded fragmentary perspective view showing the components of one bogie, and ramp and anchor means, and
Figure 5 illustrates an alternative embodiment of a relatively moveable member.

In the drawings, an elongate trolley 10 has a load engager 12 of inverted channel section so that its web 14 will be upwards to engage a load and its side walls 16, 18 will depend downwardly. Between the side walls 16, 18 and in closely adjacent clearance thereto are bogie assemblies, see 20 having spaced side walls 22, 24 interconnected by studs 26, roller axles 28 and journalled rods 30 for articulation links 32 between bogie assemblies, of which there are normally at least two per load engager, i.e. per trolley or trolley extension unit also available under the JOLODA trade mark.

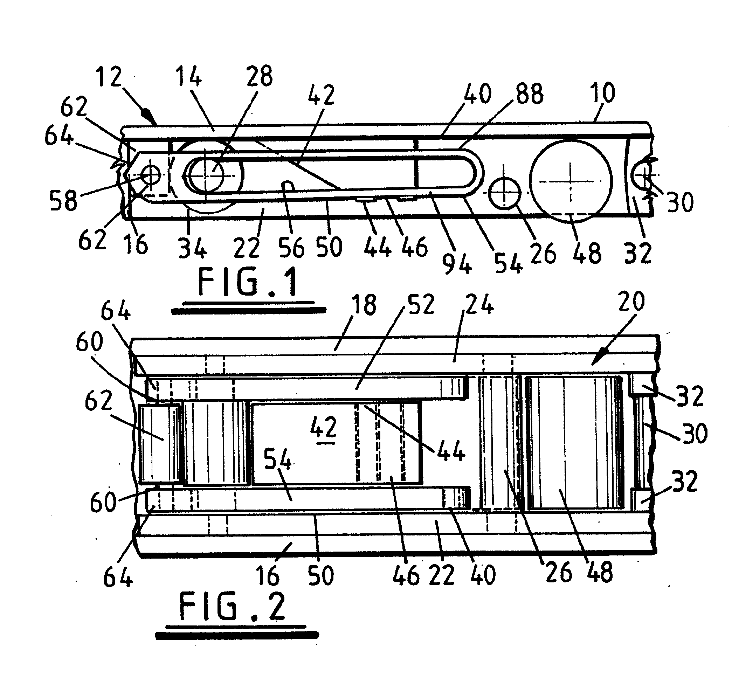

The outer diameter of roller 34 aligns with the bottom edge of the bogie side walls 22, 24. The load engager 12 has, secured to the underside of its web 14, a ramp block 40, presenting one suitable lifting surface 42 for the roller 34. That surface 42 leads over a lip or edge 44 to a roller locating depression 46 for the raised state of the trolley 10. Changing between states of the trolley 10 requires relative longitudinal movement of its load engager 12 and bogies 20, actually from left to right for the bogie 20 of Figures 1 to 3.

The bogie 20 also have rollers 48 for movement of the trolleys 10 along tracks (not shown), whether raised to project from the tracks and loaded, or lowered below the track mouth and thus unloaded. Rollers 48 project slightly below the bottom edges of the bogie side walls 22, 24.

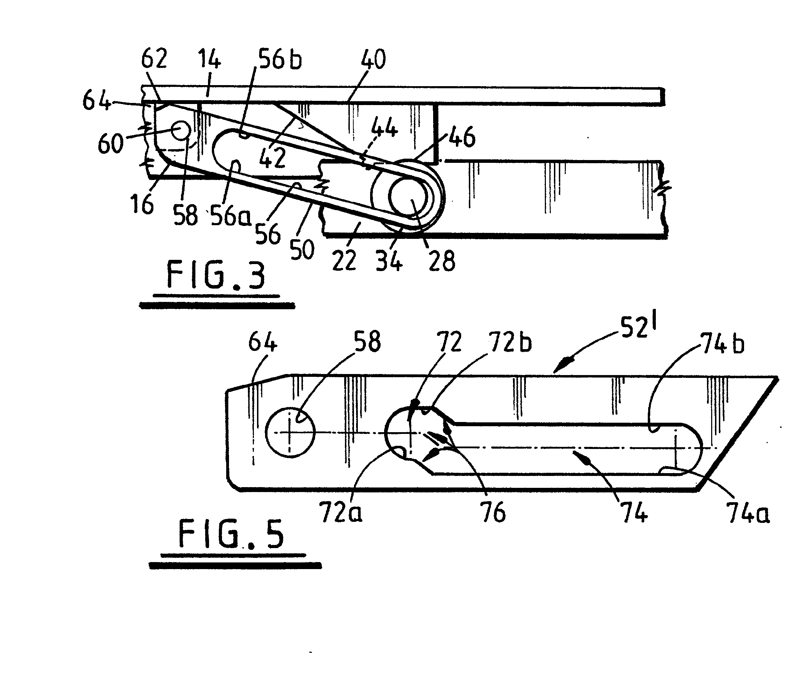

It is evident from Figure 3, that there is only a small overlap between the walls 16, 18 and those 22, 24 in the raised position of the trolley. Moreover, a still lesser overlap, say as little as 3mm, will precede that position as the roller 34 goes over the lip or edge 44. The roller 34 diameter aligns with the bottom edge of the bogie side walls 22, 24.

Retention link means for the bogie/load engager arrangement of the trolley is shown at 50. The link device 50 comprises two spaced, parallel link elements 52, 54 each having an elongate slot 56 and a bore 58. The slots 56 accommodate closely roller axle 28 with clearance (not illustrated) of the order of 2.2mm. The slot may have parallel sides 56a, 56b. The bores 58 accommodate pivot pin 60 carried by anchor element 62 which is mounted fixedly to the load engager 12.

The link device 50 is anchored to the load engager by the anchor element and associated pivot pin. When the roller mounts the ramp part 40, the arms 52, 54 pivot about the pivot pin 60.

The extent of such pivoting of the arms is limited by contact of abutment surface 64 formed on each arm 52, 54 with the under surface web 14 of the load engager.

In use, as the trolley is raised from the position of Figure 1, the bogie 20 moves relative to the load engager 12 from left to right, the links 52, 54 pivot as roller axles 28 move along the slots until the roller 34 goes over into the groove 46. During this time, the roller axle 28, traverse the slots 56 in the links, which slots are of adequate extent to accommodate maximum required movement.

The pivoting of the links is limited by the abutments 64 making contact with the load engager as mentioned above. This abutment does not come into play during normal operation of the trolley, only when the trolley is being handled in circumstances when the load engager and bogies are unrestrained to avoid undue separation of the load engager and bogies.

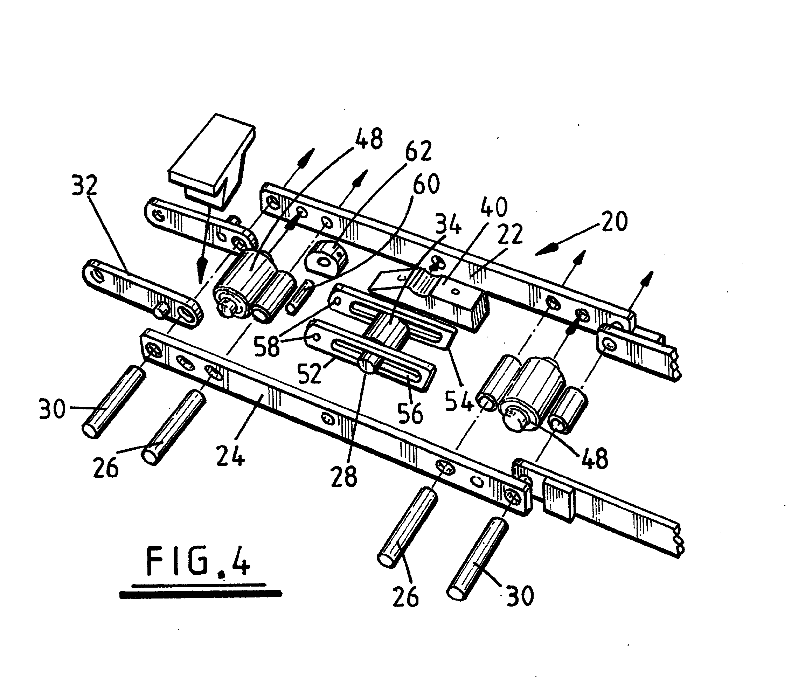

Referring now to Figure 5, there is illustrated an alternative embodiment of link element 52'. They are used for the retention link means 50 in place of the link elements 52, 54 illustrated in figures 1 to 4. The link element 52' is generally elongate and has a corresponding bore 58 and a corresponding abutment surface 64. The elongate slot 56 has an alternative configuration and comprises two offset parts 72, 74 having parallel sides 72a, 72b, 74a, 74b but whose centerlines are offset. The two parts are connected by a connecting slot part 76 also having parallel sides. Thus the elongate slot of this embodiment is kin ked.

The linked element operates in the same manner as the above described link element save. The kink in the slot reflects the path of the roller as it moves onto and up the ramp.

## Claims

1. A load handling trolley of the type that normally runs in a channel led track comprising an elongate load engager (12) raisable and lowerable relative to at least one bogie assembly (20) via ramp-and-roller means (34, 40) when the engager and the bogie assembly are caused to move longitudinally relative to each other, and positive retention means (50) between said engager and bogie assembly, **characterized in that** said positive retention means comprises an anchor element (60) fixed to the load engager and at least one other inextendable relatively movable element (52, 54, 52') mounted for pivotal movement with respect to the anchor element and haying a slot (56, 72, 74) to receive an axle (28) or some other cross-connection of the roller means (34) so as to move during relative movement of the engager and bogie assembly, and **in that** said relatively movable component has abutment means 64 that is cooperable with the load engager to limit articulation of said relatively movable component.

2. A load handling trolley as claimed in claim 1 in which two relatively movable elements are provided, disposed to opposite sides of said roller means.

3. A load handling trolley as claimed in claim 1 or 2 in which the axle or cross-connection of the roller means is journalled in a trolley part.

4. A load handling trolley as claimed in claim 3 in which the axle or cross connection of the roller means is journalled in opposite side frames of the bogie assembly.

5. A load handling trolley as claimed in any one of the preceding claims in which the slot (56) is a straight slot.

6. A load handling trolley as claimed in any one of claims 1 to 4 in which the slot (56) is a slot having two offset interconnected parts (72,74).
